(19) Europäisches Patentamt
European Patent Office
Office européen des brevets

(11) **EP 4 787 860 A1**

(12) **EUROPEAN PATENT APPLICATION**
published in accordance with Art. 153(4) EPC

(43) Date of publication:
05.08.2026 Bulletin 2026/32

(21) Application number: 24872990.7

(22) Date of filing: 26.09.2024

(51) International Patent Classification (IPC):
H04N 19/597 (2014.01)    H04N 19/96 (2014.01)
H04N 19/174 (2014.01)    H04N 19/70 (2014.01)
H04N 19/157 (2014.01)    H04N 19/184 (2014.01)

(52) Cooperative Patent Classification (CPC):
H04N 19/157; H04N 19/174; H04N 19/184;
H04N 19/597; H04N 19/70; H04N 19/96

(86) International application number:
PCT/KR2024/014631

(87) International publication number:
WO 2025/071282 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.09.2023 KR 20230129851

(71) Applicant: LG Electronics Inc.
Yeongdeungpo-gu
Seoul 07336 (KR)

(72) Inventor: HUR, Hyejung
Seoul 06772 (KR)

(74) Representative: Mooser, Sebastian Thomas
Wuesthoff & Wuesthoff
Patentanwälte und Rechtsanwalt PartG mbB
Schweigerstraße 2
81541 München (DE)

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57)    A point cloud data decoding method according to embodiments may comprise the steps of: receiving a bitstream including point cloud data; and decoding the point cloud data. A point cloud data encoding method according to embodiments may comprise the steps of: encoding point cloud data; and transmitting a bitstream including the point cloud data.

FIG. 1

EP 4 787 860 A1

## Description

### TECHNICAL FIELD

Embodiments relate to a method and device for processing point cloud content.

### BACKGROUND

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

### DISCLOSURE

### Technical Problem

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may be extended to other technical objects that may be inferred by those skilled in the art based on the entire contents disclosed herein.

### Technical Solution

The point cloud data decoding method according to embodiments may include receiving a bitstream including the point cloud data, and decoding the point cloud data. The point cloud data encoding method according to embodiments may include encoding point cloud data, and transmitting a bitstream including the point cloud data.

### Advantageous Effects

Devices and methods according to embodiments may process point cloud data with high efficiency.
The devices and methods according to the embodiments may provide a high-quality point cloud service.
The devices and methods according to the embodiments may provide point cloud content for providing general-purpose services such as a VR service and a self-driving service.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.

FIG. 1 shows an exemplary point cloud content providing system according to embodiments;
FIG. 2 is a block diagram illustrating a point cloud content providing operation according to embodiments;
FIG. 3 illustrates an exemplary point cloud encoder according to embodiments;
FIG. 4 shows an example of an octree and occupancy code according to embodiments;
FIG. 5 illustrates an example of point configuration in each LOD according to embodiments;
FIG. 6 illustrates an example of point configuration in each LOD according to embodiments;
FIG. 7 illustrates a point cloud decoder according to embodiments;
FIG. 8 illustrates a transmission device according to embodiments;
FIG. 9 illustrates a reception device according to embodiments;
FIG. 10 illustrates an exemplary structure operable in connection with point cloud data transmission/reception methods/devices according to embodiments;
FIG. 11 shows a prediction mode according to embodiments;

FIG. 12 illustrates a point cloud data encoding device according to embodiments;

FIG. 13 illustrates a point cloud data decoding device according to embodiments;

FIG. 14 illustrates a bitstream including point cloud data according to embodiments;

FIG. 15 shows a sequence parameter set according to embodiments;

FIG. 16 shows a geometry parameter set according to embodiments;

FIG. 17 shows a tile parameter set according to embodiments;

FIG. 18 illustrates a geometry data unit according to embodiments;

FIG. 19 illustrates a geometry slice header according to embodiments;

FIG. 20 shows a predictive tree according to embodiments;

FIG. 21 shows a predictive tree node according to embodiments;

FIG. 22 shows a predictive tree mode according to embodiments;

FIG. 23 shows a predictive tree residual according to embodiments;

FIG. 24 illustrates a point cloud data encoding method according to embodiments; and

FIG. 25 illustrates a point cloud data decoding method according to embodiments.

## BEST MODE

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

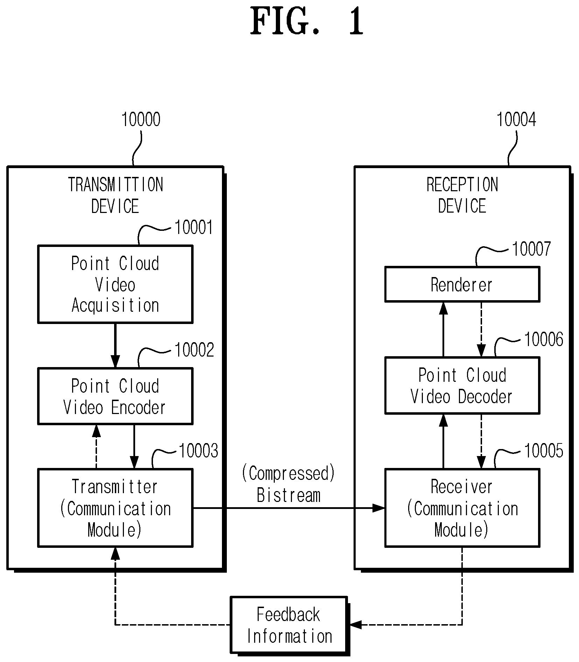

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

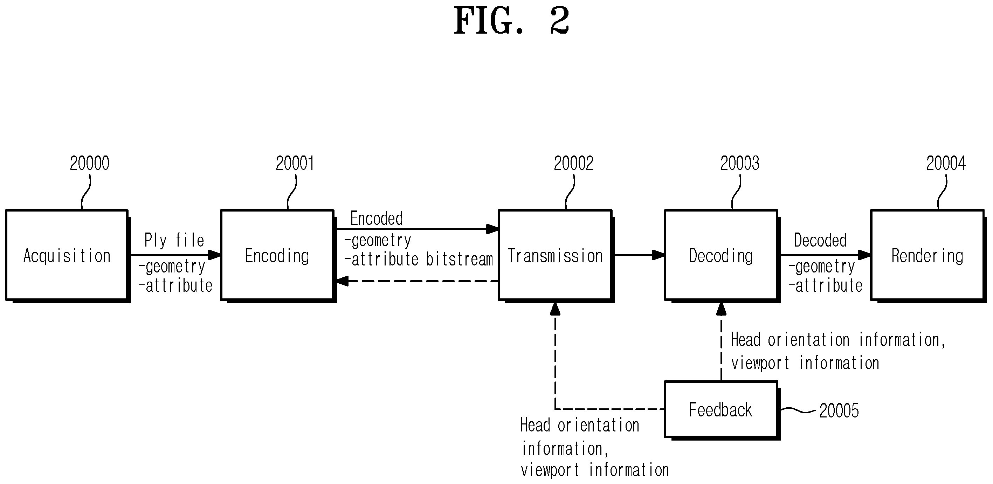

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

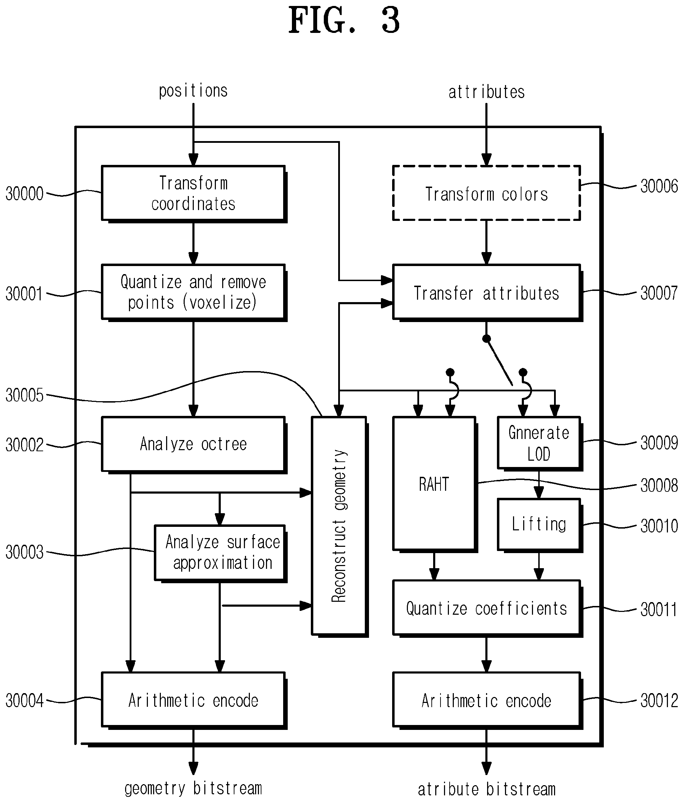

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 30000, a quantizer (Quantize and remove points (voxelize)) 30001, an octree analyzer (Analyze octree) 30002, and a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transform attributes) 30007, a RAHT transformer (RAHT) 30008, an LOD generator (Generate LOD) 30009, a lifting transformer (Lifting) 30010, a coefficient quantizer (Quantize coefficients) 30011, and/or an arithmetic encoder (Arithmetic encode) 30012.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

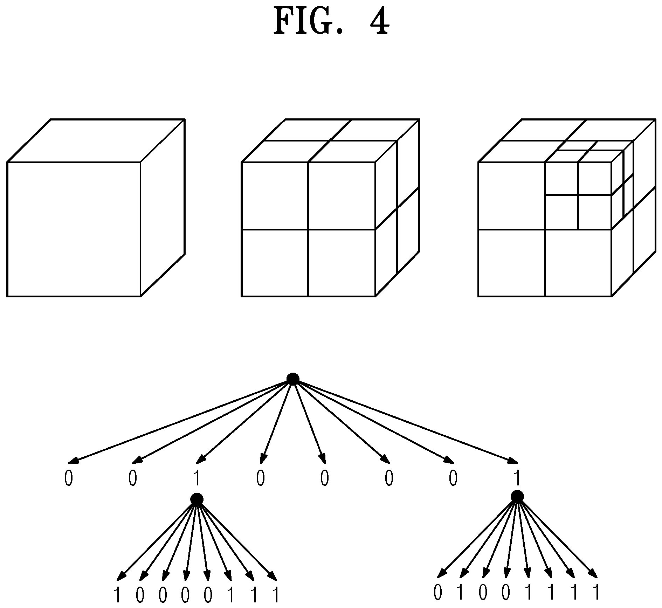

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles $(0, 0, 0)$ and $(2^d, 2^d, 2^d)$. Here, 2d may be set to a value constituting the smallest bounding box surrounding all points of the point cloud content (or point cloud video). Here, d denotes the depth of the octree. The value of d is determined in the following equation. In the following equation, $(x^{int}_n, y^{int}_n, z^{int}_n)$ denotes the positions (or position values) of quantized points.

$$d=Ceil(Log2(Max(x\_n^{int}, y\_n^{int}, z\_n^{in}, n=1,\ldots,N)+1))$$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{①}\begin{bmatrix}\mu_x\\\mu_y\\\mu_z\end{bmatrix} = \frac{1}{n}\sum_{i=1}^{n}\begin{bmatrix}x_i\\y_i\\z_i\end{bmatrix} \quad \text{②}\begin{bmatrix}\bar{x}_i\\\bar{y}_i\\\bar{z}_i\end{bmatrix} = \begin{bmatrix}x_i\\y_i\\z_i\end{bmatrix} - \begin{bmatrix}\mu_x\\\mu_y\\\mu_z\end{bmatrix} \quad \text{③}\begin{bmatrix}\sigma_x^2\\\sigma_y^2\\\sigma_z^2\end{bmatrix} = \sum_{i=1}^{n}\begin{bmatrix}\bar{x}_i^2\\\bar{y}_i^2\\\bar{z}_i^2\end{bmatrix}$$

The minimum value of the sum is estimated, and the projection process is performed according to the axis with the minimum value. For 'example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

Triangles formed from vertices ordered 1,...,n

n triangles
3 (1,2,3)
4 (1,2,3), (3,4,1)
5 (1,2,3), (3,4,5), (5,1,3)
6 (1,2,3), (3,4,5), (5,6,1), (1,3,5)
7 (1,2,3), (3,4,5), (5,6,7), (7,1,3), (3,5,7)
8 (1,2,3), (3,4,5), (5,6,7), (7,8,1), (1,3,5), (5,7,1)
9 (1,2,3), (3,4,5), (5,6,7), (7,8,9), (9,1,3), (3,5,7), (7,9,3)
10 (1,2,3), (3,4,5), (5,6,7), (7,8,9), (9,10,1), (1,3,5), (5,7,9), (9,1,5)
11 (1,2,3), (3,4,5), (5,6,7), (7,8,9), (9,10,11), (11,1,3), (3,5,7), (7,9,11), (11,3,7)
12 (1,2,3), (3,4,5), (5,6,7), (7,8,9), (9,10,11), (11,12,1), (1,3,5), (5,7,9), (9,11,1), (1,5,9)

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

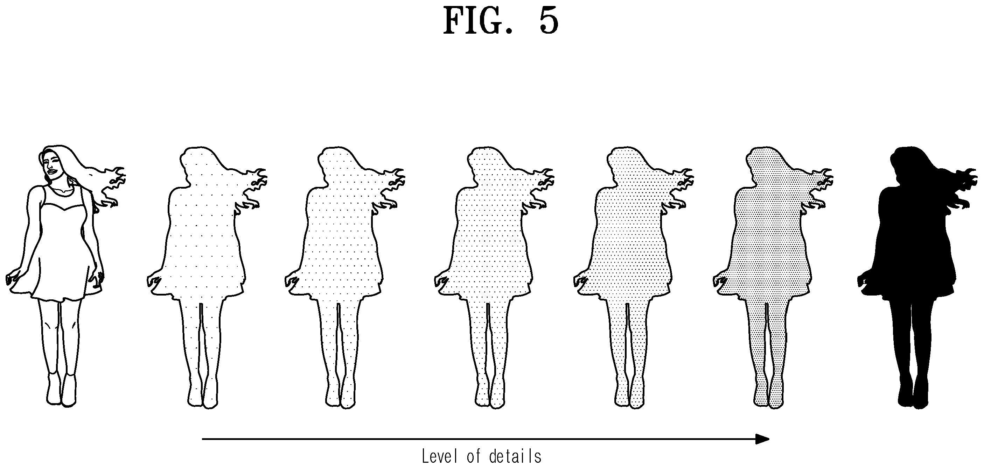

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

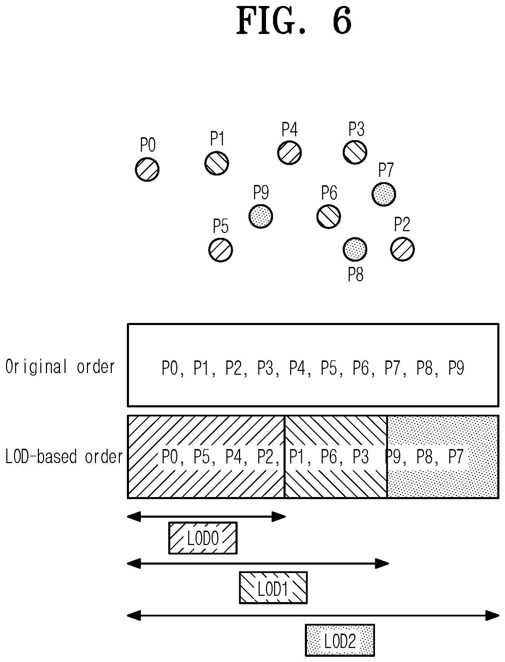

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, or attribute prediction residuals, attribute residuals) obtained by subtracting a predicted attribute (attribute value) from the attribute (attribute value) of each point. The quantization process is configured as shown in the following table.

TABLE Attribute prediction residuals quantization pseudo code

```
int PCCQuantization(int value, int quantStep) {
if( value >=0) {
return floor(value / quantStep + 1.0 / 3.0);
} else {
return -floor(-value / quantStep + 1.0 / 3.0);
}
}
```

TABLE Attribute prediction residuals inverse quantization pseudo code

```
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l\,x,y,z}$ denotes the average attribute value of voxels at level l. $g_{l\,x,y,z}$ may be calculated based on $g_{l+1\,2x,y,z}$ and $g_{l+1\,2x+1y,z}$. The weights for $g_{l\,2x,y,z}$ and $g_{l\,2x,y,z}$ are w1 = $w_{l\,2x,y,z}$ and w2 = $w_{l\,2x,y,z}$.

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix}, T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\,x,y,z}$ is a low-pass value and is used in the merging process at the next higher level. $h_{l-1\,x,y,z}$ denotes high-pass coefficients. The high-pass coefficients at each step are quantized and subjected to entropy coding (e.g., encoding by the arithmetic encoder 300012). The weights are calculated as $w_{l-1x,y,z} = w_{l\,2x,y,z} + w_{l\,2x,y,z}$. The root node is created through the $g_{1\,0,0,0}$ and $g_{1\,0,0,1}$ as follows.

$$\begin{bmatrix} gDC \\ h_{0_{0,0,0}} \end{bmatrix} = T_{w1000\,w1001} \begin{bmatrix} g_{1_{0,0,0z}} \\ g_{1_{0,0,1}} \end{bmatrix}$$

The value of gDC is also quantized and subjected to entropy coding like the high-pass coefficients.

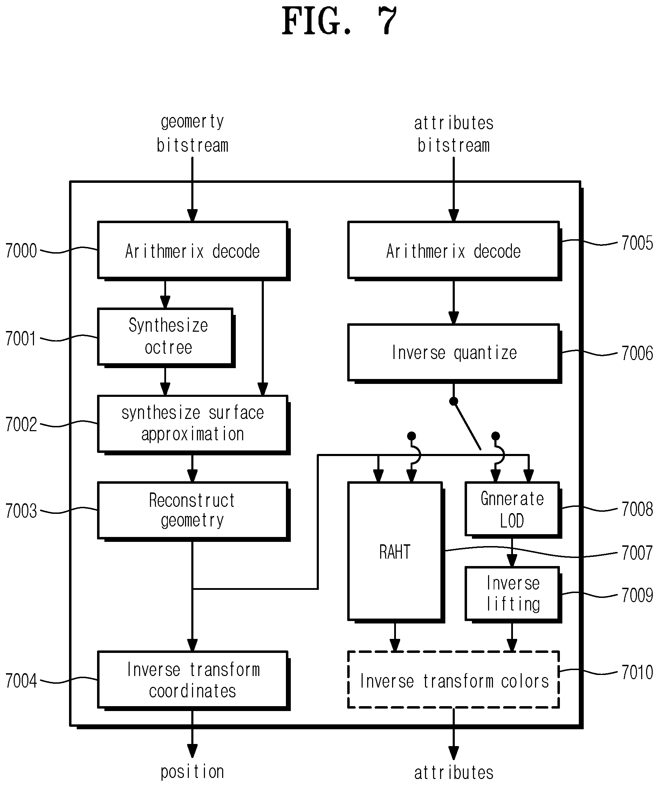

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding described with reference to FIG. 6. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

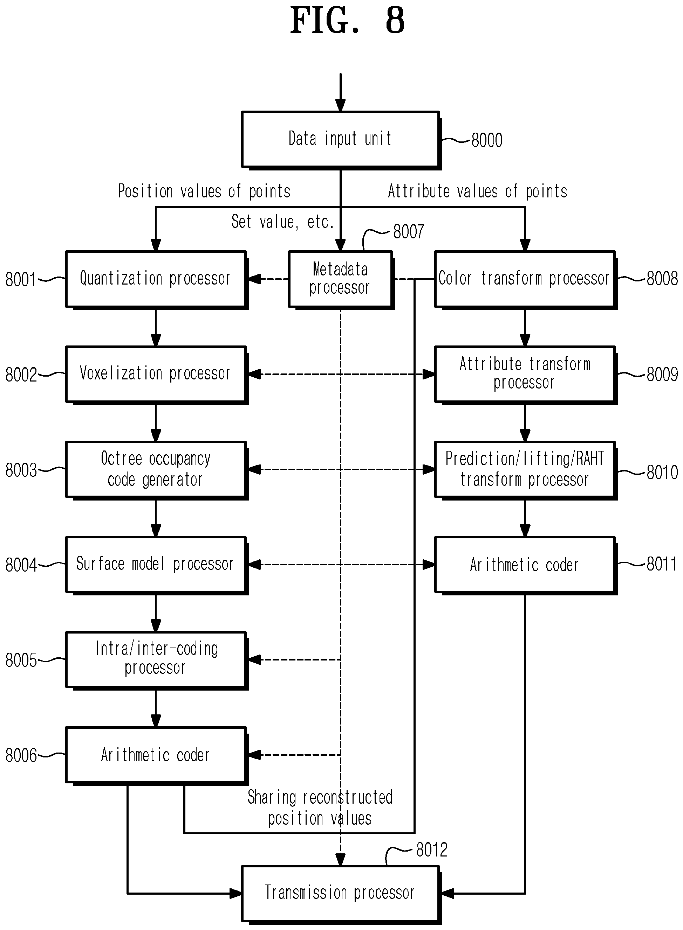

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquirer 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding described with reference to FIG. 7. Details are the same as those described with reference to FIG. 7. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

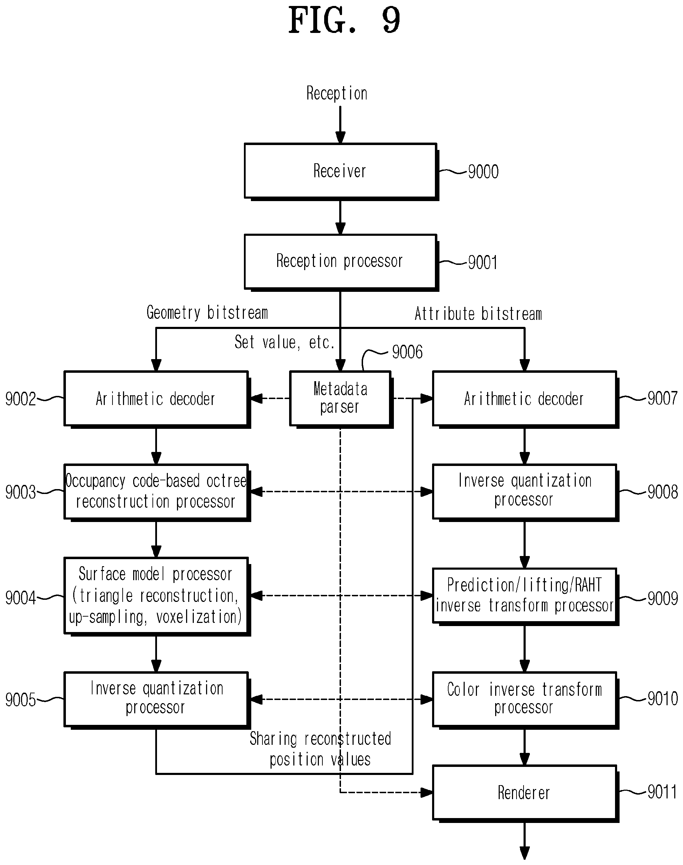

FIG. 9 illustrates a reception device according to embodiments.

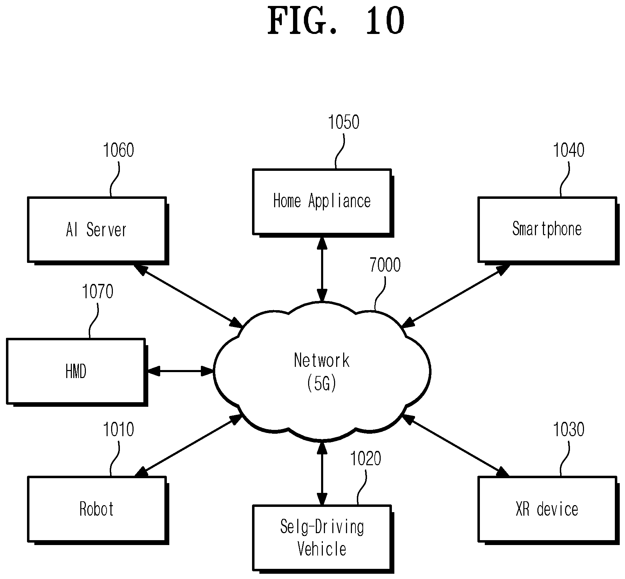

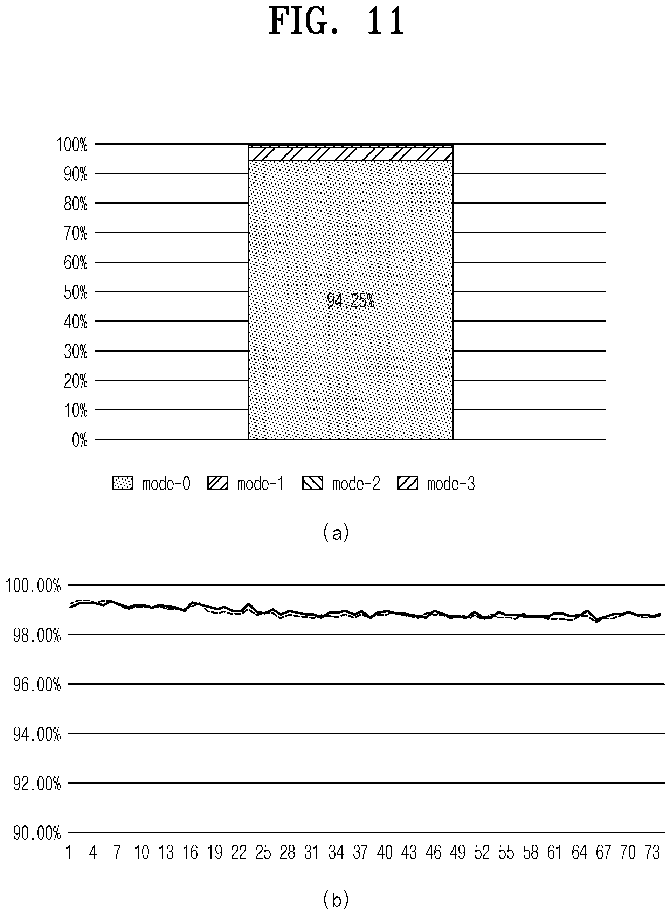

The reception device illustrated in FIG. 9 is an example of the reception device 10004 of FIG. 1 (or the point cloud decoder of FIGS. 10 and 11). The reception device illustrated in FIG. 9 may perform one or more of the operations and methods the same as or similar to those of the point cloud decoder described with reference to FIGS. 1 to 11.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 10, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to FIGS. 1 to 10, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010. The renderer 9011 according to the embodiments may render the point cloud data.

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

<PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

<PCC+XR+Mobile phone>

The XR/PCC device 1030 may be implemented as a mobile phone 1040 by applying PCC technology.

The mobile phone 1040 may decode and display point cloud content based on the PCC technology.

<PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

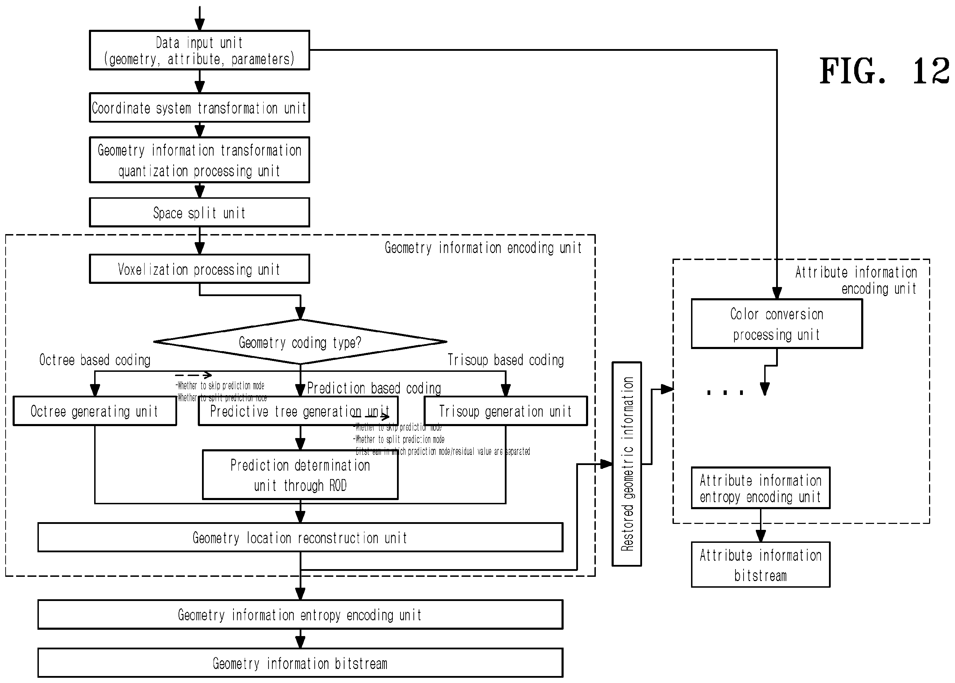

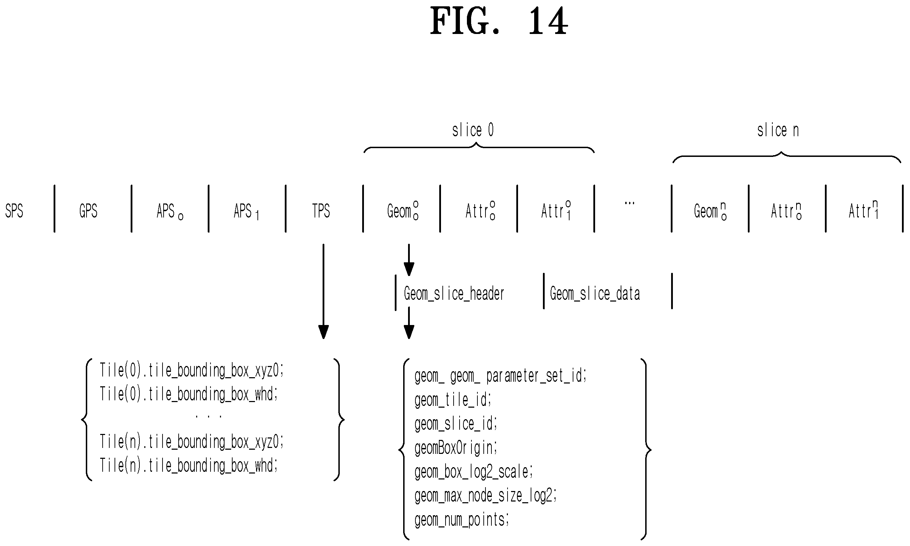

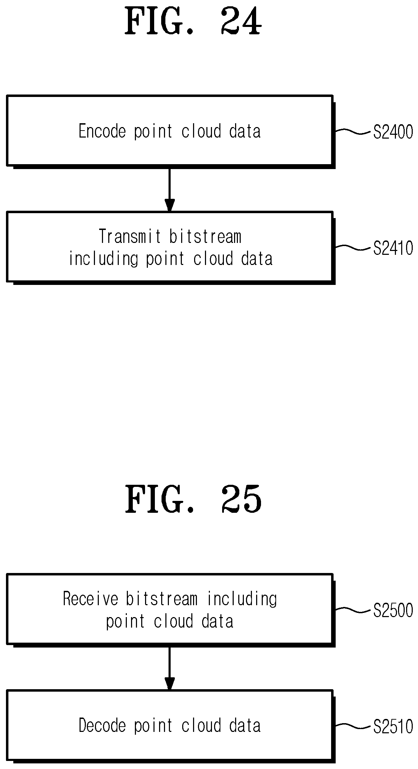

The point cloud data transmission method/device according to embodiments is interpreted as a term referring to the transmission device 10000, the point cloud video encoder 10002, and the transmitter 10003 of FIG. 1, the acquisition-encoding-transmission 20000-20001-20002 of FIG. 2, the encoder of FIGS. 3 and 8, each device of FIG. 10, prediction mode-based encoding of FIG. 11, the encoder of FIG. 12, the bitstream generation including parameters of FIGS. 14 to 23, the encoding method of FIG. 24, and the like.

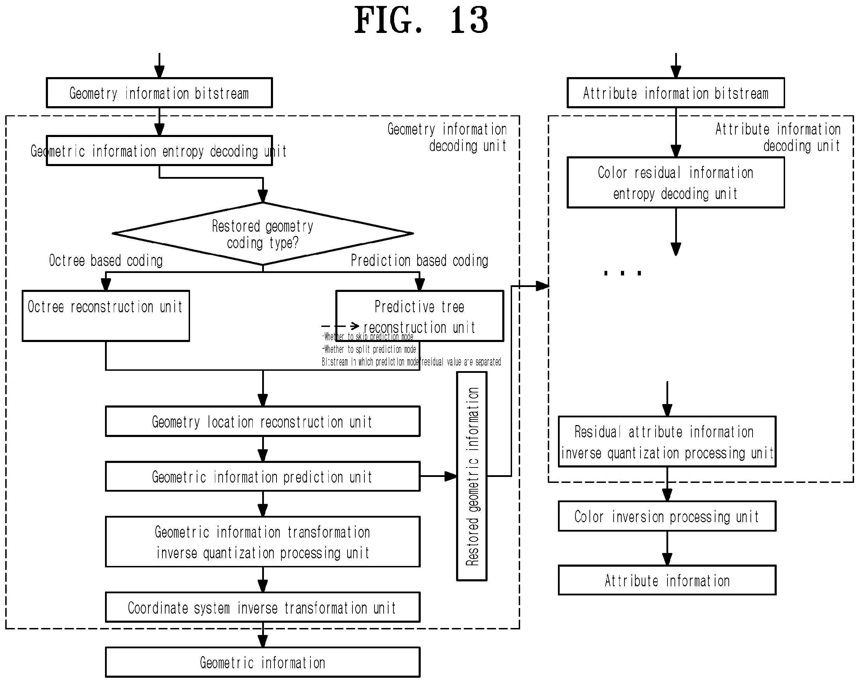

The point cloud data reception method/device according to embodiments is interpreted as a term referring to the reception device 10004, the receiver 10005, and the point cloud video decoder 10006 of FIG. 1, the transmission-decoding-rendering 20002-20003-20004 of FIG. 2, decoder of FIG. 7, the reception device of FIG. 9, the device of FIG. 10, prediction mode-based decoding of FIG. 11, the decoder of FIG. 13, bitstream parsing including parameters of FIGS. 14 to 23, the decoding method of FIG. 25, and the like.

The point cloud data transmission/reception method/device according to embodiments may be referred to as the point cloud data encoding/decoding method/device according to embodiments, and may be abbreviated as the method/device according to embodiments.

In some embodiments, geometry data, geometry information, location information, and the like that constitute point cloud data are interpreted as having the same meaning. Attribute data, attribute information, attribute information, and the like that constitute point cloud data are interpreted as having the same meaning.

The method/device according to embodiments includes and performs a method of reducing a bitstream size during predictive tree coding in a point cloud captured by a LiDAR.

Embodiments include a method of efficiently applying predictive tree coding of point cloud content captured by a LiDAR device on a moving vehicle for efficient geometry compression of geometry-based point cloud compression (G-PCC). For example, the embodiments may include a predictive tree coding prediction mode skip scheme, a predictive tree coding prediction mode, a residual separation transmission scheme, and/or a predictive tree construction scheme for grouping the same prediction modes.

Embodiments include a method for improving the compression efficiency of geometry-based point cloud compression for compressing 3D point cloud data. Hereinafter, the encoder and encoding device is referred to as an encoder, and the decoder and decoding device is referred to as a decoder.

A point cloud may include a set of points, and each point may have geometry information and attribute information. The geometry information is 3D position (XYZ) information, and the attribute information is color (RGB, YUV, or the like) or/and a reflectance value.

A G-PCC encoding process may split a point cloud into tiles according to region, and each tile may be split into slices for parallel processing. The G-PCC encoding process may include a process of compressing geometry for each slice unit and compressing attribute information based on reconstructed geometry (decoded geometry) with location information changed through compression.

The G-PCC decoding process may include a process of receiving a geometry bitstream and an attribute bitstream for each encoded slice unit, decoding the geometry, and decoding attribute information based on the geometry reconstructed through the decoding process.

Octree-based, predictive tree-based, or trisoup-based compression schemes may be used to compress geometry information.

The embodiments include a coding scheme for improving coding compression efficiency based on predictive tree with high compression efficiency for content captured by an LiDAR device in a moving vehicle.

FIG. 11 shows a prediction mode according to embodiments.

The method according to the embodiments may efficiently compress and restore geometric location information through a predictive tree-based coding method in the case of content captured by a LiDAR device of a moving vehicle.

For predictive tree-based coding, a predictive tree may be be generated first. A method of generating a predictive tree according to embodiments may include the following methods.

When supporting angular mode with a spinning LiDAR, points may be grouped for each laser index and aligned in azimuth order for each laser index.

Based on the aligned points, a previous point may be set as a parent node, and when there is no previous point, a first point of the immediately previous laser index may be set as the parent node.

When there is no previous laser index, it may be set as a root node.

For non-spinning LiDAR or integrated data (in which frames are integrated into one ply), the points may be aligned based on azimuth or radius, a predictive tree is constructed in the aligned order, and the closest point among points registered in the predictive tree is found, and when a node containing the corresponding point has three or fewer points as child nodes, the node may be set as a parent node and registered in the predictive tree. When the corresponding node already has three points as child nodes, a node with the next closest point may be checked.

As such, a predictive tree may be generated, tree nodes in the predictive tree may be visited in depth-first order, and in the case of a spinning LiDAR, a prediction mode may be set through a predictor list. The predictor list may update the most recently registered point (=index 0) when a radius difference from a previous point is within a range based on a radius threshold. When the radius difference is outside the range of the radius threshold, all points registered in the predictor list are shifted to the right, and a new point may be registered at position of index=0. When a point is selected as a predictor, the point is removed from the predictor list.

The prediction mode according to embodiments is as follows: the prediction mode may be defined, for example, 0= predictor_list[0], 1= predictor_list[1], or 2= predictor_list[2].

For other non-spinning LIDARs or integrated data, tree nodes in the predictive tree are visited in depth-first order, and the location of the point may be predicted in four ways through the parent node, the parent's parent node, and the parent's parent's parent node of the predictive tree, as follows. The prediction mode according to embodiments is as follows: 0 = (0,0,0) or the specified minimum point, 1= parent_node, 2= parent_node + (parent_node - grand_parent_node), 3= parent_node + (grand_parent_node - grand_grand_parent_node).

The most appropriate prediction mode may be selected through RDO, and the prediction mode and a residual value between a predicted value and a current value may be compressed and transmitted through entropy coding.

For example, for distribution of the prediction mode, there may be a phenomenon in which more than 94 % of the points select 0 as a prediction mode value, and for another content, more than 98 % of the points select 0 as the prediction mode value.

Embodiments may apply a method of reducing a bitstream size by using prediction mode 0, for example, when a majority of points select prediction mode 0 to efficiently support compression of content captured by a LiDAR device in a moving vehicle. Similarly, when a majority of points are selected to the same mode among prediction modes 0 to 3, a method of reducing a bitstream size by using this may be applied.

The encoding method according to embodiments may include a prediction mode skip operation, a prediction mode and residual value separation transmission operation, and/or a prediction mode-based predictive tree generation operation.

The decoding method according to embodiments may include a prediction mode skip operation, a prediction mode and residual value separation transmission operation, and/or a prediction mode-based predictive tree generation operation.

Prediction mode skip operation:
When the prediction mode is, for example, mostly 0, the prediction mode may be set to all 0 and skipped. A flag using prediction mode 0 may be signaled and the decoder may then set the mode to 0 and perform decoding accordingly. This may improve geometry compression efficiency by reducing the bitstream size by not transmitting the prediction mode bitstream.

Similarly, when the prediction modes of the points are mostly a specific mode value (e.g., a specific identical value among modes 0 to 3), the prediction mode may be skipped and a flag using the same mode may be transmitted via signaling information. The decoder may decode point cloud data with the same prediction mode value.

Prediction mode and residual value separation transmission operation:
The method according to embodiments may separately transmit a prediction mode bitstream and a residual value bitstream for a point. When transmitting the prediction mode and the residual value separately, a zero-run-length coding method may be used for the prediction mode. The number of repetitions for consecutive identical modes may be coded and mode values may be coded. This may increase geometry compression efficiency by reducing a bitstream size by efficiently applying mode transmission as there are more points using prediction mode 0 (or the same prediction mode).

To prevent latency from increasing when separately transmitting bitstreams for one frame, all frames may be divided into N point clouds to generate a predictive tree, and the prediction mode and residual value may be transmitted separately for the N points.

For example, when transmitting a prediction mode for a point and a residual value for the point to be in the bitstream, the prediction mode and the residual value may be separated within the bitstream to increase compression and restoration performance for the same prediction mode. When the prediction modes for points having the same prediction mode are located in the bitstream, and separately, the residual values for the points are located in the bitstream, the size of the bitstream may be further reduced as a result of coding for the same prediction mode rather than having the prediction mode and residual value located within the bitstream at each point.

In some embodiments, the prediction mode and residual value separation transmission operation may be optional.

Prediction mode-based predictive tree generation operation:
The method according to embodiments may change (generate) the predictive tree configuration such that points with a high probability of having a prediction mode 0 (or the same prediction mode value) may be consecutive when separately transmitting a prediction mode bitstream and a residual value bitstream for a point.

For example, a prediction mode 0 (or the same prediction mode value) may increase the probability of having a prediction mode of 0 when the point is within the threshold range based on a new object threshold. Therefore, when constructing the predictive tree, if a point is expected to have a prediction mode of 0, a point may be registered as a left child node of a parent node. The predictive tree may be configured to search in depth-first order such that nodes to the left of the node select mode 0. This may have an effect of grouping points with prediction mode 0, which may reduce the prediction mode bitstream size and thus improve geometry compression efficiency. This is true not only for prediction mode 0, but also for prediction modes 1 to 3.

Hereinafter, each method is described with reference to drawings relating to the device.

FIG. 12 illustrates a point cloud data encoding device according to embodiments.

Each component of the PCC data encoder of FIG. 12 may correspond to hardware, software, a processor, and/or a combination thereof.

The device of FIG. 12 may correspond to the transmission device 10000, the point cloud video encoder 10002, and the transmitter 10003 of FIG. 1, the acquisition-encoding-transmission 20000-20001-20002 of FIG. 2, the encoder of FIGS. 3 and 8, each device of FIG. 10, the prediction mode-based encoding of FIG. 11, bitstream generation including parameters of FIGS. 14 to 23, the encoding method of FIG. 24, and the like.

The input of the encoder is PCC data, and point cloud data (PCC data) may be encoded to output a bitstream including a geometry information bitstream and an attribute information bitstream.

When a geometry coding type is prediction-based coding, a geometry information encoding unit may select an optimal prediction mode by generating a predictive tree through a predictive tree generation unit and performing an RDO process based on the predictive tree generated through a prediction determination unit. A geometry prediction value may be generated according to the optimal prediction mode.

A geometry information bitstream may be constructed by entropy coding a residual value with the predicted value in a geometry information entropy encoding unit.

The predictive tree generation unit may set the prediction mode of all points to 0 and generate a residual bitstream when whether to skip a prediction mode (pred_mode_skip_flag) is true. The prediction mode bitstream may not be transmitted separately, and only the residual bitstream may be constructed and transmitted. Whether to skip the prediction mode may be signaled to the decoder.

The predictive tree generation unit mayn construct a bitstream by separating the prediction mode and the residual value through whether to split the prediction mode (pred_mode_split_enable). Whether to split the prediction mode may be signaled to the decoder.

The predictive tree generation unit may perform predictive tree configuration along with the prediction mode-based predictive tree generation operation when whether to split the prediction mode (pred_mode_split_enable) is true.

A data input unit receives point cloud data. For example, point cloud data may include geometry, attribute, parameters about geometry, and/or parameters about attribute.

A coordinate system transformation unit may transform a coordinate system of geometry into a coordinate system appropriate for encoding. Coordinate systems may include an orthogonal coordinate system and an angular coordinate system.

The geometry information transformation quantization processing unit may quantize geometry based on a quantization parameter.

A space split unit may split a space including geometry (point).

The geometry information encoding unit may include a voxelization processing unit, an octree generation unit, a predictive tree generation unit, a trisoup generation unit, an RDO-based prediction determination unit, and/or a geometry location reconstruction unit.

The voxelization processing unit may voxelize geometry.

The geometry information encoding unit may generate a tree, or the like according to a geometry coding type. For example, when the geometry coding type is an octree, an octree containing points may be generated. When the geometry coding type is a predictive tree, a predictive tree containing points may be generated. The predictive tree generation unit may construct a predictive tree based on information about whether to skip a prediction mode and/or information about whether to split a prediction mode. The predictive tree generation unit may include, in the bitstream, information about whether to skip a prediction mode and/or information about whether to split a prediction mode. A bitstream with the separated prediction mode and residual value may be constructed. When the geometry coding type is a trisoup, a trisoup containing points may be generated.

The RDO-based prediction determination unit may generate a prediction value for the current point based on the predictive tree. The residual value between the current geometry and the prediction value may be encoded and included in the bitstream.

The geometry location reconstruction unit may restore the encoded geometry and forward the restored geometry to the attribute information encoding unit.

The geometry information entropy encoding unit may encode the residual value generated according to the geometry coding type based on an entropy method.

The attribute information encoding unit may convert the color system of the color for attribute data that includes color.

The attribute information encoding unit may encode attribute information (attributes) based on RAHT, level of detail (LoD), and the like. Based on RAHT, level of detail (LoD), and the like, the prediction values for current attributes may be generated and the residual value may be generated.

An attribute information entropy encoding unit may encode attribute information including the residual value based on an entropy method.

FIG. 13 illustrates a point cloud data decoding device according to embodiments.

Each component of the PCC data decoder of FIG. 13 may correspond to hardware, software, a processor, and/or a combination thereof.

The input of the decoder includes an encoded geometry information bitstream and/or attribute information bitstream. The bitstream may be decoded and the restored PCC data may be output.

The operation of the decoding device (decoder) of FIG. 13 may be a reverse process of the encoding device (encoder) of FIG. 12.

The decoding device of FIG. 13 may correspond to the reception device 10004, the receiver 10005, and the point cloud video decoder 10006 of FIG. 1, transmission-decoding-rendering 20002-20003-20004 of FIG. 2, the decoder of FIG. 7, the reception device of FIG. 9, the device of FIG. 10, prediction mode-based decoding of FIG. 11, bitstream parsing including parameters of FIGS. 14 to 23, the decoding method of FIG. 25, and the like.

The predictive tree reconstruction unit may receive and restore information about whether to skip the prediction mode (pred_mode_skip_flag), and when whether to skip the prediction mode is true, the predictive tree reconstruction unit may assume the prediction mode of all points as 0 and may decode the points through the residual value.

The predictive tree reconstruction unit may receive and restore information about whether to split the prediction mode (pred_mode_split_enable) and decode the prediction mode and the residual value. The prediction mode is compressed through zero-run-length coding, and thus the prediction mode may be restored by restoring the number of mode repetitions.

A geometry information decoding unit receives the geometry information bitstream.

A geometric information entropy decoding unit may decode geometry data based on an entropy method.

The geometry information decoding unit may decode geometry data according to the geometry coding type. The geometry coding type may include an octree, a predictive tree, and trisoup.

An octree reconstruction unit may reconstruct an octree from geometry data in the case of octree-based coding.

The predictive tree reconstruction unit may reconstruct a predictive tree from geometry data in the case of prediction-based coding. The predictive tree may be reconstructed by parsing information about whether to skip a prediction mode, information about whether to split a prediction mode, and the like included in the bitstream. The predictive tree reconstruction unit may receive a bitstream in which the prediction mode and residual value are separated, and reconstruct the predictive tree.

The geometry location reconstruction unit may reconstruct decoded geometry and forward the reconstructed geometry to an attribute information decoding unit.

A geometric information prediction unit may generate prediction values for geometry based on an octree. The geometric information prediction unit may generate prediction values for geometry based on a predictive tree. Geometry may be restored by adding the prediction value to the residual value included in the bitstream.

A geometric information transformation inverse quantization processing unit may inversely quantize the geometry based on a quantization parameter.

A coordinate system inverse transformation unit may reversely transform the coordinate system of the transformed geometry.

The attribute information decoding unit may receive an attribute information bitstream and decode attribute residual information within the bitstream based on an entropy method.

The attribute information decoding unit may decode attribute information (attributes) based on RAHT, level of detail (LoD), and the like.

A residual attribute information inverse quantization processing unit may inversely quantize the quantized attribute based on the quantization parameter.

A color inversion processing unit may inversely convert the transformed color system.

FIG. 14 illustrates a bitstream including point cloud data according to embodiments.

The encoding device such as in FIG. 12 according to embodiments may generate and transmit a bitstream including encoded point cloud data and related parameter, as shown in FIG. 14.

The decoding device such as in FIG. 13 according to embodiments may receive a bitstream and decode point cloud data based on a parameter, as shown in FIG. 14.

Each abbreviation in the information in the bitstream means the following. Each abbreviation may be referred to by other terms within the scope of equivalent meaning: SPS: sequence parameter set, GPS: geometry parameter set, APS: attribute parameter set, TPS: tile parameter set, geometry (Geom): geometry bitstream = geometry slice header + geometry slice data, and attribute (Attr): attribute bitstream = attribute brick header + attribute brick data. The slice is a unit of encoding and decoding. The slice includes a slice header and slice data. The slice may be referred to by terms such as data unit, or brick.

The encoding method according to embodiments may signal motion option information for geometry predictive tree coding by adding the motion option information to at least one of SPS, GPS, or TPS.

The motion option information for geometry predictive tree coding may be added to the TPS or the geometry data header for each slice and signaled.

The bitstream includes a tile, or a slice, which allows the point cloud to be divided into areas and processed.

When dividing by area, different options for generating neighboring point sets for each region may be set, providing a selection method that has low complexity but somewhat low result reliability, or conversely, high complexity but high reliability. The option may be set differently depending on the processing capability of the receiver.

Therefore, when the point cloud is divided into tiles, different options may be applied to each tile.

When the point cloud is divided into slices, different options may be applied for each slice.

The encoding method according to embodiments may add information about the prediction mode and residual split configuration to geometry slice data.

Hereinafter, the definition of the parameters included in the bitstream of FIG. 14 is described.

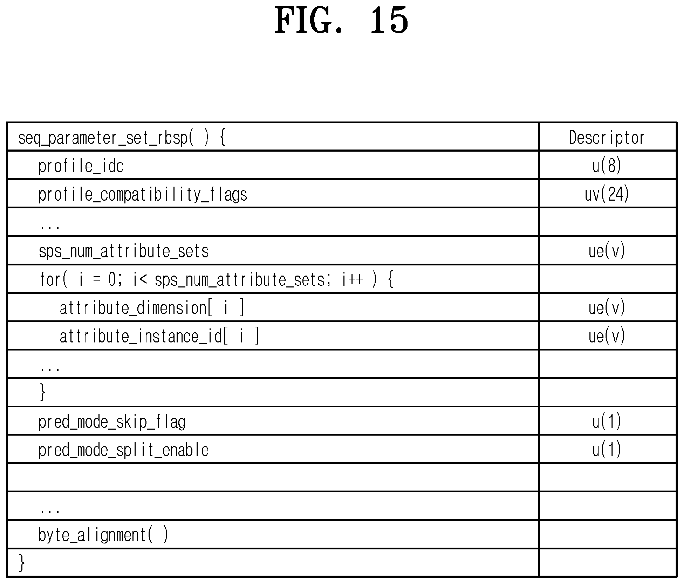

FIG. 15 shows a sequence parameter set according to embodiments.

The sequence parameter set may include option information about predictive tree generation. Thus, the encoding/decoding method according to embodiments may efficiently perform predictive tree generation.

Prediction mode skip flag: Indicates whether to transmit the prediction mode when applying prediction geometry tree coding to the corresponding sequence.

For example, the flags may be expressed as 0 = no transmission of prediction mode, are all assumed as 0, and are expressed as 1 = transmission of prediction mode.

Prediction mode initial value: When applying prediction geometry tree coding to the corresponding sequence, a default mode value may be indicated when the prediction mode is not transmitted.

That is, when the prediction mode is not zero by default, the default mode value may be indicated through pred_mode_default_value to support skipping of various prediction modes.

Prediction mode split enable: When applying prediction geometry tree coding to the corresponding sequence, whether to construct and transmit the prediction mode and prediction residual values separately may be indicated.

For example, it may be expressed as 0 = transmission of the prediction mode and residual value for one point as a pair, and 1 = separate transmission of the prediction mode and residual value.

Profile (profile_idc) indicates a profile to which a bitstream conforms.

When a profile compatibility flag is 1, this indicates that the bitstream complies with a profile with profile_idc of j.

The number of attribute sets (sps_num_attribute_sets) indicates the number of coded attributes in the bitstream. A value of sps_num_attribute_sets is in the range of 0 to 63.

An attribute dimension represents the number of components of an ith attribute.

An attribute instance ID represents an instance ID of the ith attribute.

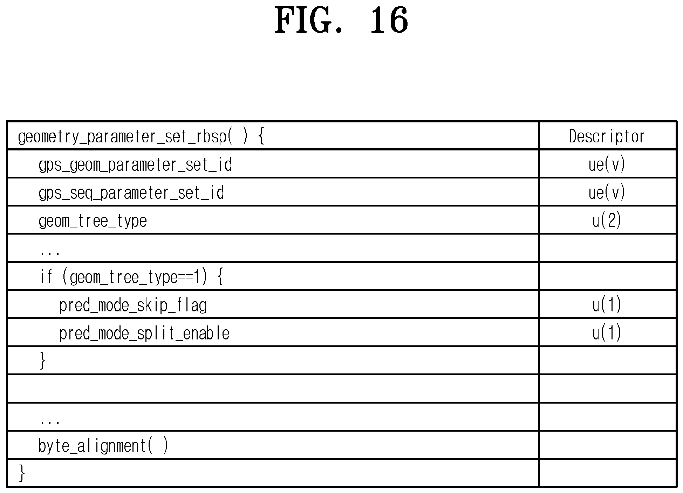

FIG. 16 shows a geometry parameter set according to embodiments.

The encoding method according to embodiments may add motion option information related to geometry predictive tree coding for geometry information encoding/decoding to a geometry parameter set. Thus, the encoding/decoding method according to embodiments may efficiently perform intra and inter prediction of geometry.

Geometry parameter set ID (gps_geom_parameter_set_id): Indicates a GPS identifier that is to be referenced by other syntax elements.

Sequence parameter set ID (gps_seq_parameter_set_id): Indicates a value of sps_seq_parameter_set_id for an active SPS.

Geometry tree type: When geom_tree_type is 0, it indicates that the location information is coded using an octree. When geom_tree_type is 1, it indicates that the location information is coded using a predictive tree.

Prediction mode skip flag: Indicates whether to transmit the prediction mode when applying prediction geometry tree coding to a flag. For example, the flags may be expressed as 0 = no transmission of prediction mode, are all assumed as 0, and are expressed as 1 = transmission of prediction mode.

Prediction mode default value: When applying prediction geometry tree coding to a frame, a default mode value may be indicated when the prediction mode is not transmitted.

Prediction mode separation enable: When applying prediction geometry tree coding to a frame, whether to construct and transmit the prediction mode and prediction residual values separately may be indicated. For example, it may be expressed as 0 = transmission of the prediction mode and residual value for one point as a pair, and 1 = separate transmission of the prediction mode and residual value.

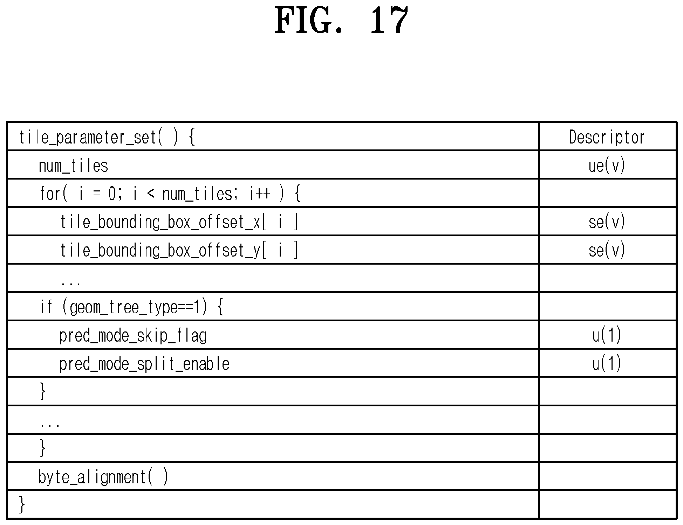

FIG. 17 shows a tile parameter set according to embodiments.

The encoding method according to embodiments may add option information related to road/object split and geometry predictive tree coding to a tile parameter set. Thus, the encoding/decoding method according to embodiments may efficiently perform intra and inter prediction.

The number of tiles (num_tiles) indicates the number of tiles signaled for the bitstream. If not present, num_tiles is inferred to be 0.

Tile bounding box offset x represents an x-offset of an ith tile in Cartesian coordinates. If not present, a value of tile_bounding_box_offset_x[0] is inferred to be sps_bounding_box_offset_x.

Tile bounding box offset y represents a y-offset of an ith tile in Cartesian coordinates. If not present, a value of tile_bounding_box_offset_y[0] is inferred to be sps_bounding_box_offset_y.

Prediction mode skip flag: Indicates whether to transmit the prediction mode when applying prediction geometry tree coding to a tile. For example, flags may be expressed as 0 = no transmission of prediction mode, may be all assumed to be 0, and may be expressed as 1 = transmission of the prediction mode.

Prediction mode default value: When applying prediction geometry tree coding to a tile, a default mode value may be indicated when the prediction mode is not transmitted.

Prediction mode separation enable: When applying prediction geometry tree coding to a tile, whether to separately construct/transmit the prediction mode and prediction residual values may be indicated. For example, it may be expressed as 0 = transmission of the prediction mode/residual value for one point as a pair, and 1 = separate transmission of the prediction mode and residual value.

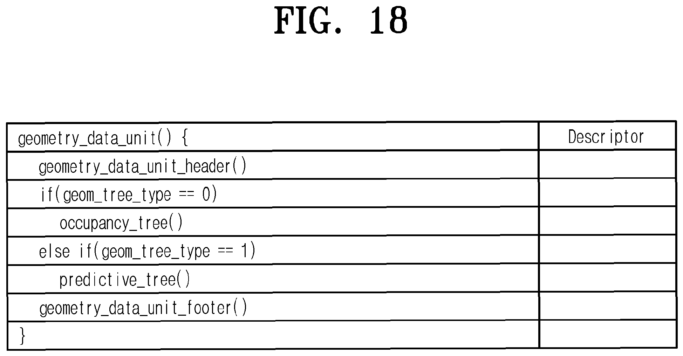

FIG. 18 illustrates a geometry data unit according to embodiments.

Geometry data information syntax of FIG. 18 may include a geometry data unit header. When the geometry trip type is 0, it may contain an occupancy tree, and when the geometry tree type is 1, it may contain a predictive tree. The geometry trip type may include a geometry data unit footer.

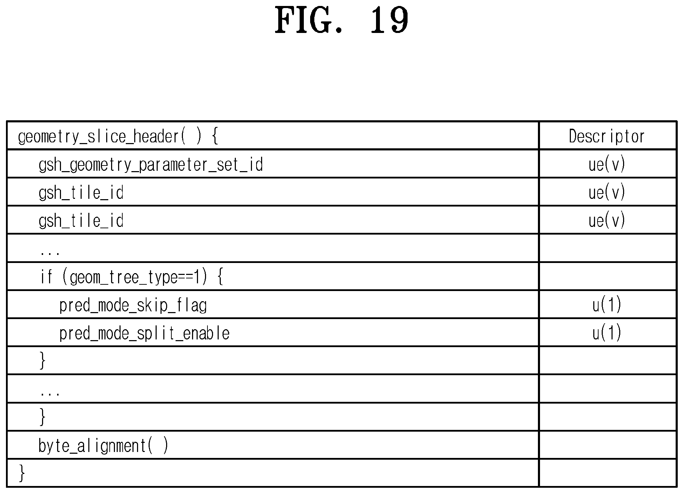

FIG. 19 illustrates a geometry slice header according to embodiments.

The encoding method according to embodiments may add motion option information related to geometry predictive tree coding for geometry information encoding/decoding to a geometry data header. Thus, the encoding/decoding method according to embodiments may efficiently perform intra/inter prediction. The geometry slice header of FIG. 19 may be referred to as a geometry data unit header.

A geometry parameter set ID (gsh_geometry_parameter_set_id) represents a gps_geom_parameter_set_id value of an active GPS.

A tile ID (gsh_tile_id) represents a tile ID value referenced in GSH.

A slice ID (gsh_slice_id) indicates a slice header that other syntax elements will reference.

Prediction mode skip flag: Indicates whether to transmit the prediction mode when applying prediction geometry tree coding to a tile. For example, flags may be expressed as 0 = no transmission of prediction mode, may be all assumed to be 0, and may be expressed as 1 = transmission of the prediction mode.

Prediction mode default value: When applying prediction geometry tree coding to a tile, a default mode value may be indicated when the prediction mode is not transmitted.

Prediction mode separation enable: When applying prediction geometry tree coding to a tile, whether to separately construct/transmit the prediction mode and prediction residual values may be indicated. For example, it may be expressed as 0 = transmission of the prediction mode/residual value for one point as a pair, and 1 = separate transmission of the prediction mode and residual value.

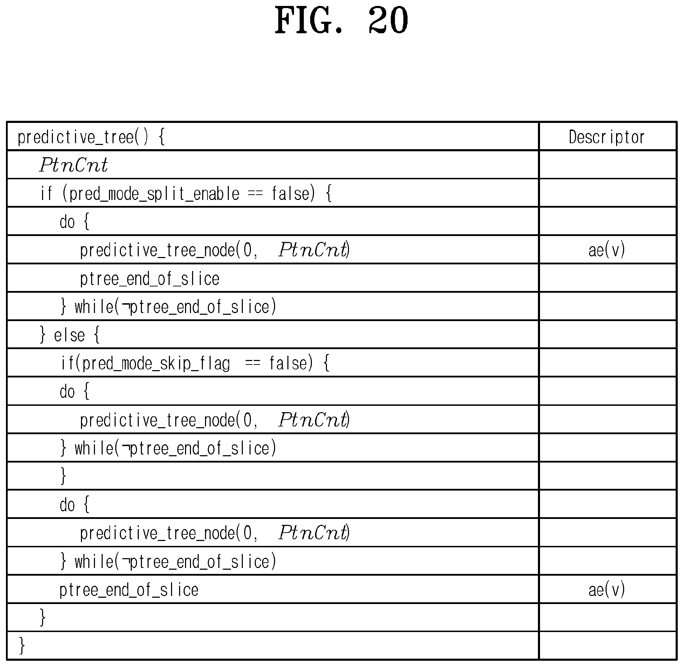

FIG. 20 shows a predictive tree according to embodiments.

The encoding method according to embodiments may add motion option information related to geometry predictive tree coding for geometry information encoding/decoding to a predictive tree node. Thus, the encoding/decoding method according to embodiments may efficiently perform intra/inter prediction.

Predictive tree node: Which may forward points. It may represent the predictive tree bitstream configuration.

Slice predictive tree end: Indicates a separator indicating the end of the predictive tree.

Predictive tree mode: Indicates the prediction mode bitstream configuration.

Predictive tree residual value: Indicates the residual value bitstream configuration.

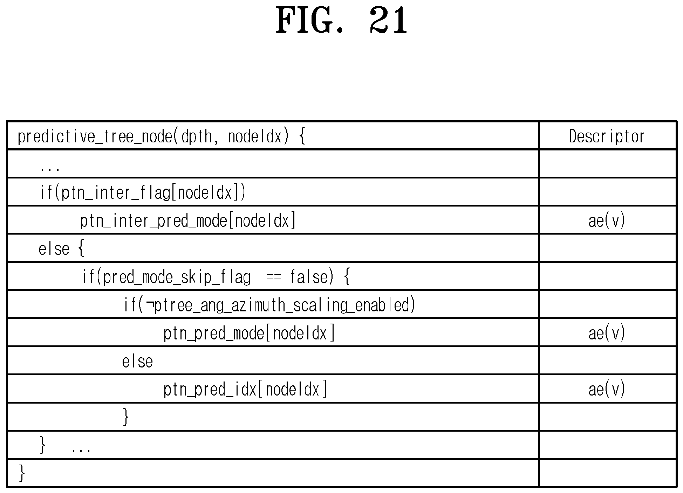

FIG. 21 shows a predictive tree node according to embodiments.

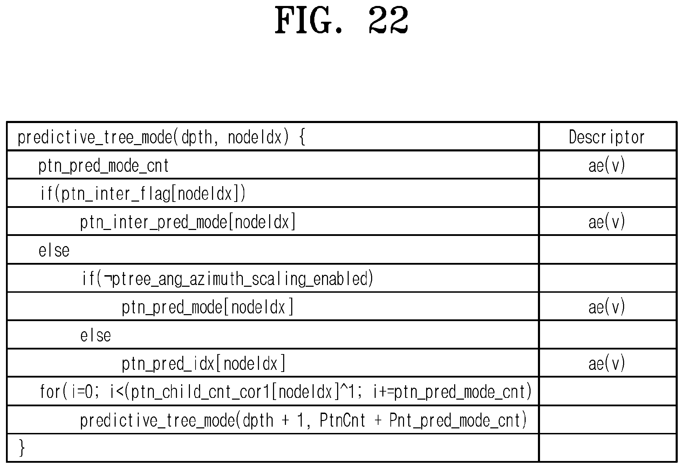

FIG. 22 shows a predictive tree mode according to embodiments.

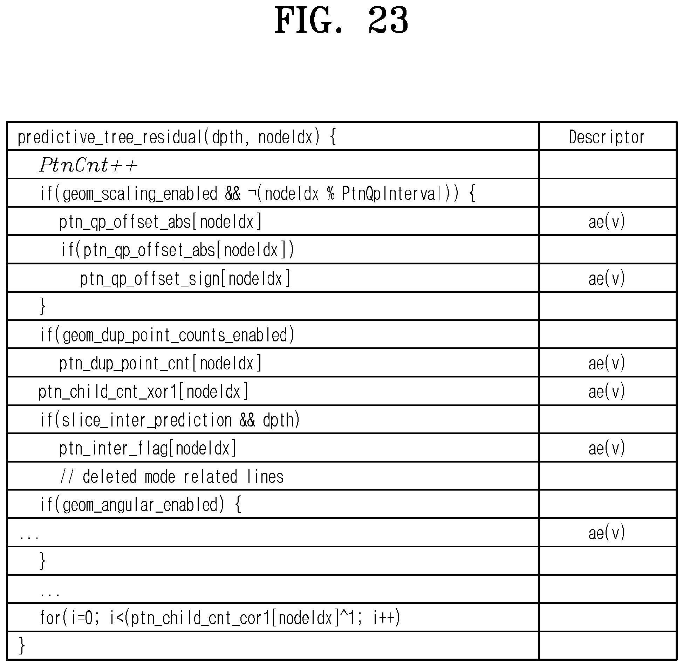

FIG. 23 shows a predictive tree residual according to embodiments.

When an inter flag (ptn_inter_flag[nodeIdx]) is 1, it indicates that a location of a node is coded via inter prediction. When ptn_inter_flag[nodeIdx] is not present, it is inferred to be 0.

Prediction mode count (ptn_pred_mode_chut): Indicates the number of repetitions of the prediction mode.

Inter prediction mode (ptn_inter_pred_mode[nodeIdx]) indicates a method used to predict a coded point location of a node by using inter prediction.

The prediction mode (ptn_pred_mode[nodeIdx]) indicates a method used to predict the coded point location of a node. When an adaptive quantization step size of a predicted geometric azimuth residual is provided (ptree_ang_azimuth_scaling_enabled is 1), ptn_pred_mode[nodeIdx] is not present and is inferred to be 1.

A prediction index (ptn_pred_idx[nodeIdx]) indicates an index of a predictor in a prediction list for each coordinate to be used to predict the coded point location of a node when an adaptive quantization step size of the predicted geometric azimuth residual is provided (when ptree_ang_azimuth_scaling_enabled is 1).

ptree_ang_azimuth_scaling_enabled indicates whether the predicted geometric azimuth residual needs to be scaled by a radius (when 1) or not (when 0). The effect is to provide an adaptive quantization step size of the predicted geometric azimuth residual, resulting in uniform quantization of the arc for all radii. When ptree_ang_azimuth_scaling_enabled is not present, it is inferred to be 0.

A QP offset and QP offset sign (ptn_qp_offset_abs[nodeIdx] and ptn_qp_offset_sign[nodeIdx]) together represent an offset into the slice geometry QP used to scale a point location according to PtnQpOffset[nodeIdx], if present. ptn_qp_offset_sign indicates whether the sign of the offset is positive (if 0) or negative (if 1). When ptn_qp_offset_sign is not present, it is inferred to be 0.

Point count (ptn_dup_point_cnt[nodeIdx]): When adding 1 to this value, it indicates the number of points represented by a node. When ptn_dup_point_cnt[nodeIdx] is not present, it is inferred to be 0.

Child count (ptn_child_cnt_xor1[nodeIdx]): When applying xor 1 to this value, it indicates the number of child nodes.

FIG. 24 illustrates a point cloud data encoding method according to embodiments.

The encoding method of FIG. 24 may include operations of the transmission device 10000, the point cloud video encoder 10002, the transmitter 10003 of of FIG. 1, the acquisition-encoding-transmission 20000-20001-20002 of FIG. 2, the encoder of FIGS. 3 and 8, each device of FIG. 10, the prediction mode-based encoding of FIG. 11, the encoder of FIG. 12, and bitstream generation including parameters of FIGS. 14 to 23.

The point cloud data encoding method according to embodiments may include encoding point cloud data (S2400).

The point cloud data encoding method according to embodiments may further include transmitting a bitstream including the point cloud data (S2410).

Referring to FIG. 12, the encoding of the point cloud data (S2400) may include encoding geometry data of the point cloud data, and encoding attribute data of the point cloud data, and the encoding of the geometry data may include encoding geometry data based on a predictive tree representing the geometry data.

A residual value for geometry data may be generated based on a prediction mode having a first value, and the bitstream may include a residual value without information about the prediction mode. For example, information indicating the applied prediction mode for point cloud data having the same prediction mode as the first value may not be included in the bitstream. Such an encoding operation may be signaled to the decoder via pred_mode_skip_flag information. The first value may be one of the prediction modes 0 to 3.

The residual value for geometry data may be generated based on a prediction mode having a first value, and information about the prediction mode and the residual value may be separated and included in the bitstream. For example, when information indicating a prediction mode applied to point cloud data having the same prediction mode as the first value is encoded and included in the bitstream, information about the prediction mode may be collected and positioned separately from the residual value in the bitstream to increase compression performance. Such an encoding operation may be signaled to the decoder via pred_mode_split_enable information.

The bitstream includes at least one of a sequence parameter set, a geometry parameter set, a tile parameter set, or a geometry data unit header, and at least one of the sequence parameter set, the geometry parameter set, the tile parameter set, or the geometry data unit header may further include information (pred_mode_default_value) indicating a value of a prediction mode for cases in which the prediction mode is not transmitted. That is, there may be a case in which a prediction mode default value is not prediction mode 0 but prediction mode 1 to 3, and thus a default value of a prediction mode may be included in the bitstream to inform the decoder.

The encoding of the geometry data (S2400) may include generating a predictive tree, and the predictive tree may register a point of the geometry data as a child node of the predictive tree for a prediction mode having a first value when the geometry data exists within a range having a threshold. For example, point cloud data with the same prediction mode is classified. That is, to increase compression performance, a predictive tree may be constructed by granting a parent-child node relationship to points subject to the same prediction mode.

The point cloud data encoding method may be performed by a point cloud data encoding device, as shown in FIG. 1. The point cloud data encoding device may include an encoder configured to encode point cloud data, and a transmission unit configured to transmit a bitstream including the point cloud data. The encoder may encode geometry data of point cloud data and encode attribute data of the point cloud data, and in this case, the encoding of the geometry data may include encoding the geometry data based on a predictive tree representing the geometry data.

FIG. 25 illustrates a point cloud data decoding method according to embodiments.

The decoding method of FIG. 25 may include operations of the reception device 10004, the receiver 10005, and the point cloud video decoder 10006 of FIG. 1, transmission-decoding-rendering 20002-20003-20004 of FIG. 2, the decoder of FIG. 7, the reception device of FIG. 9, the device of FIG. 10, prediction mode-based decoding of FIG. 11, the decoder of FIG. 13, bitstream parsing including parameters of FIGS. 14 to 23, and the like.

The decoding method of FIG. 25 may follow a reverse process of the encoding method of FIG. 24.

The point cloud data decoding method according to embodiments may further include receiving a bitstream including the point cloud data (S2500).

The point cloud data decoding method according to embodiments may include decoding the point cloud data (S2510).

Referring to FIG. 13, the decoding of the point cloud data (S2510) may include decoding geometry data of the point cloud data, and decoding attribute data of the point cloud data, and the decoding of the geometry data may include decoding geometry data based on a predictive tree representing the geometry data.

Referring to FIGS. 15 to 19, with respect to pred_mode_skip_flag information, the bitstream may include at least one of a sequence parameter set, a geometry parameter set, a tile parameter set, or a geometry data unit header, and at least one of the sequence parameter set, the geometry parameter set, the tile parameter set, or the geometry data unit header may include a flag (pred_mode_skip_flag) related to a prediction mode, and the flag related to the prediction mode may include one of a first value indicating that a prediction mode for geometry data of point cloud data is not transmitted, or a second value indicating that a prediction mode for geometry data of point cloud data is transmitted.

Referring to FIGS. 15 to 19, with respect to the pred_mode_default_value information, at least one of the sequence parameter set, the geometry parameter set, the tile parameter set, or the geometry data unit header may further include information (pred_mode_default_value) indicating a value of the prediction mode for a case in which the prediction mode is not transmitted.

Referring to FIGS. 15 to 19, with respect to the pred_mode_split_enable information, at least one of the sequence parameter set, the geometry parameter set, the tile parameter set, or the geometry data unit header may include information (pred_mode_split_enable) indicating whether to separate and transmit the prediction mode for the geometry data of the point cloud data and the residual value for the geometry data.

Referring to FIGS. 15 to 19, with respect to the pred_mode_split_enable information, the first value of the pred_mode_split_enable information may indicate whether the prediction mode and residual value are transmitted as a pair, and the second value of the pred_mode_split_enable information may indicate whether the prediction mode and residual value are transmitted separately. For example, whether the prediction mode and residual value are positioned as a pair for each point within the bitstream, or whether the prediction mode and residual value are separated and positioned with the prediction modes and the residual values, may be indicated through the pred_mode_split_enable information.

The point cloud data decoding method of FIG. 25 may be performed by a point cloud data decoding device, as shown in FIG. 1. The point cloud data decoding device according to embodiments may include a reception unit configured to receive a bitstream including point cloud data, and a decoder configured to decode the point cloud data.

The embodiments (PCC encoding method, PCC decoding method, and signaling method) provide the following effects.

When using prediction geometry coding to efficiently support compression of content captured by a LiDAR device on a moving vehicle, it may be possible to reduce a bitstream size by ensuring that the majority of points are selected for prediction mode 0 (or the same value among prediction modes 1 and 3).

Therefore, geometry may be efficiently compressed by utilizing the features captured by the LiDAR device in a moving vehicle.

When using prediction geometry coding to efficiently support compression of content captured through the LiDAR device in a moving vehicle, a method for skipping a prediction mode, a method of separating a prediction mode and a residual value and efficiently configuring a prediction mode bitstream, and a method of constructing a predictive tree for efficiently configuring a prediction mode bitstream may be provided.

Thus, embodiments may provide a point cloud content stream by increasing the intra/inter geometry compression efficiency of an encoder/decoder of geometry-based point cloud compression (G-PCC) for compressing 3D point cloud data.

Accordingly, the transmission method/device according to the embodiments may efficiently compress point cloud data to transmit the data, and by forwarding signaling information therefor, the reception method/device according to the embodiments may also efficiently decode/restore point cloud data.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/-reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments. **Mode for Disclosure**

As described above, related details have been described in the best mode for carrying out the embodiments.

**Industrial Applicability**

As described above, the embodiments are fully or partially applicable to a point cloud data transmission/reception device and system.

Those skilled in the art may change or modify the embodiments in various ways within the scope of the embodiments.

Embodiments may include variations/modifications within the scope of the claims and their equivalents.

**Claims**

1.   A point cloud data decoding method comprising:

       receiving a bitstream including point cloud data; and
       decoding the point cloud data.

2.   The point cloud data decoding method of claim 1, wherein the decoding of the point cloud data includes:

       decoding geometry data of the point cloud data: and
       decoding attribute data of the point cloud data, and
       the decoding of the geometry data includes, based on a predictive tree representing the geometry data, decoding the geometry data.

3.   The point cloud data decoding method of claim 1, wherein the bitstream includes at least one of a sequence parameter set, a geometry parameter set, a tile parameter set, or a geometry data unit header,

       at least one of the sequence parameter set, the geometry parameter set, the tile parameter set, or the geometry data unit header includes a flag related to a prediction mode, and
       the flag related to the prediction mode includes one of a first value indicating that a prediction mode for geometry data of the point cloud data is not transmitted, or a second value indicating that the prediction mode for the geometry data of the point cloud data is transmitted.

4.   The point cloud data decoding method of claim 3, wherein at least one of the sequence parameter set, the geometry parameter set, the tile parameter set, or the geometry data unit header further includes information indicating a value of the prediction mode for a case in which the prediction mode is not transmitted.

5.   The point cloud data decoding method of claim 3, wherein at least one of the sequence parameter set, the geometry parameter set, the tile parameter set, or the geometry data unit header includes information indicating whether to separately transmit a prediction mode for geometry data of the point cloud data and a residual value for the geometry data.

6.   The point cloud data decoding method of claim 5, wherein the first value of the information indicates whether the prediction mode and the residual value are transmitted in pairs, and
the second value of the information indicates whether the prediction mode and the residual value are separately transmitted.

7.   A point cloud data decoding device comprising:

       a receiving unit configured to receive a bitstream including point cloud data; and
       a decoder configured to decode the point cloud data.

8.   A point cloud data encoding method comprising:

       encoding point cloud data; and
       transmitting a bitstream including the point cloud data.

9.   The point cloud data encoding method of claim 8, wherein the encoding of the point cloud data includes:

       encoding geometry data of the point cloud data: and
       encoding attribute data of the point cloud data, and
       the encoding of the geometry data includes, based on a predictive tree representing the geometry data, encoding the geometry data.

**10.** The point cloud data encoding method of claim 9, wherein a residual value for the geometry data is generated based on a prediction mode having a first value, and
the bitstream includes the residual value without information about the prediction mode.

**11.** The point cloud data encoding method of claim 9, wherein a residual value for the geometry data is generated based on a prediction mode having a first value, and
information about the prediction mode and the residual value are separated and included in the bitstream.

**12.** The point cloud data encoding method of claim 9, wherein the bitstream includes at least one of a sequence parameter set, a geometry parameter set, a tile parameter set, or a geometry data unit header, and
at least one of the sequence parameter set, the geometry parameter set, the tile parameter set, or the geometry data unit header further includes information indicating a value of the prediction mode for a case in which the prediction mode is not transmitted.

**13.** The point cloud data encoding method of claim 9, wherein the encoding of the geometry data includes generating the predictive tree, and
the prediction mode registers a point of the geometry data as a child node of the predictive tree for a prediction mode having a first value when the geometry data is present within a range having a threshold.

**14.** A point cloud data encoding device comprising:

an encoder configured to encode point cloud data; and
a transmission unit configured to transmit a bitstream including the point cloud data.

**15.** The point cloud data encoding device of claim 14, wherein the encoder is configured to encode geometry data of the point cloud data, and encode attribute data of the point cloud data, and
the encoding of the geometry data includes, based on a predictive tree representing the geometry data, encoding the geometry data.

# FIG. 1

# FIG. 2

```
         20000                    20001                              20002          20003              20004
    ┌──────────────┐         ┌──────────────┐                  ┌──────────────┐ ┌──────────────┐ ┌──────────────┐
    │              │ Ply file │              │ Encoded         │              │ │              │ Decoded │              │
    │  Acquisition │ ───────→ │   Encoding   │ -geometry ────→ │ Transmission │→│   Decoding   │ -geometry ────→ │  Rendering  │
    │              │-geometry │              │ -attribute      │              │ │              │ -attribute │              │
    │              │-attribute│              │  bitstream ←--- │              │ │              │ │              │
    └──────────────┘         └──────────────┘                  └──────────────┘ └──────────────┘ └──────────────┘
```

Head orientation information,
viewport information

Feedback   — 20005

Head orientation
information,
viewport information

# FIG. 3

positions

attributes

| | |
|---|---|
| 30000 — Transform coordinates | Transform colors — 30006 |
| 30001 — Quantize and remove points (voxelize) | Transfer attributes — 30007 |
| 30005 — | |
| 30002 — Analyze octree | Gnnerate LOD — 30009 |
| | Reconstruct geometry | RAHT — 30008 |
| 30003 — Analyze surface approximation | Lifting — 30010 |
| | Quantize coefficients — 30011 |
| 30004 — Arithmetic encode | Arithmetic encode — 30012 |

geometry bitstream

atribute bitstream

# FIG. 4

# FIG. 5

Level of details

# FIG. 6

Original order | P0, P1, P2, P3, P4, P5, P6, P7, P8, P9

LOD-based order | P0, P5, P4, P2, | P1, P6, P3 | P9, P8, P7

LOD0

LOD1

LOD2

# FIG. 7

geomerty
bitstream

attributes
bitstream

7000 — Arithmerix decode

7005 — Arithmerix decode

7001 — Synthesize
octree

7006 — Inverse quantize

7002 — synthesize surface
approximation

7003 — Reconstruct
geometry

RAHT

Gnnerate
LOD — 7008

7007

Inverse
lifting — 7009

7004 — Inverse transform
coordinates

Inverse transform colors — 7010

position

attributes

# FIG. 8

```
                        ┌─────────────────────┐
                        │   Data input unit    │───8000
                        └─────────────────────┘
     Position values of points    │    Attribute values of points
              ┌───────────────────┼────────────────────┐
                    Set value, etc.  │───8007
                                     │
┌──────────────────────┐   ┌──────────────┐   ┌──────────────────────┐
│ Quantization processor│◄──│   Metadata   │   │Color transform processor│───8008
└──────────────────────┘   │  processor   │   └──────────────────────┘
  8001                     └──────────────┘
              │                                          │
┌──────────────────────┐                   ┌──────────────────────┐
│ Voxelization processor│◄─────────────────│  Attribute transform │───8009
└──────────────────────┘                   │       processor      │
  8002        │                            └──────────────────────┘
┌──────────────────────┐                   ┌──────────────────────┐
│   Octree occupancy    │◄─────────────────│ Prediction/lifting/RAHT│───8010
│   code generator      │                  │  transform processor  │
└──────────────────────┘                   └──────────────────────┘
  8003        │                                          │
┌──────────────────────┐                   ┌──────────────────────┐
│ Surface model processor│◄────────────────│   Arithmetic coder    │───8011
└──────────────────────┘                   └──────────────────────┘
  8004        │
┌──────────────────────┐
│    Intra/inter-coding  │◄──
│       processor        │
└──────────────────────┘
  8005        │
┌──────────────────────┐
│   Arithmetic coder     │◄──
└──────────────────────┘
  8006        │
        Sharing reconstructed
          position values
                                          ┌──────────────┐───8012
                        ┌─────────────────│ Transmission processor │◄──────
                        └──────────────────────────────────┘
```

# FIG. 9

Reception

| | |
|---|---|
| Receiver | ~9000 |

Reception processor ~9001

Geometry bitstream    Set value, etc.    ~9006    Attribute bitstream

9002~ Arithmetic decoder ← Metadata parser → Arithmetic decoder ~9007

9003~ Occupancy code-based octree reconstruction processor ← Inverse quantization processor ~9008

9004~ Surface model processor (triangle reconstruction, up-sampling, voxelization) ← Prediction/lifting/RAHT inverse transform processor ~9009

9005~ Inverse quantization processor ← Color inverse transform processor ~9010

Sharing reconstructed position values

Renderer ~9011

# FIG. 10

# FIG. 11

94.25%

☒ mode-0  ▨ mode-1  ☒ mode-2  ▨ mode-3

(a)

100.00%

98.00%

96.00%

94.00%

92.00%

90.00%

1  4  7  10 13 16 19 22 25 28 31 34 37 40 43 46 49 52 55 58 61 64 67 70 73

(b)

FIG. 12

# FIG. 13

Geometry information bitstream

Geometry information decoding unit

Geometric information entropy decoding unit

Restored geometry coding type?

Octree based coding — Octree reconstruction unit

Prediction based coding — Predictive tree reconstruction unit
-Whether to skip prediction mode
-Whether to split prediction mode
Bitstream in which prediction mode residual value are separated

Geometry location reconstruction unit

Geometric information prediction unit

Restored geometric information

Geometric information transformation inverse quantization processing unit

Coordinate system inverse transformation unit

Geometric information

Attribute information bitstream

Attribute information decoding unit

Color residual information entropy decoding unit

. . .

Residual attribute information inverse quantization processing unit

Color inversion processing unit

Attribute information

# FIG. 14

slice 0 — | Geom$_0^0$ | Attr$_0^0$ | Attr$_1^0$ | ··· | slice n — Geom$_0^n$ | Attr$_0^n$ | Attr$_1^n$ |

SPS | GPS | APS$_0$ | APS$_1$ | TPS | Geom$_0^0$ | Attr$_0^0$ | Attr$_1^0$ | ··· | Geom$_0^n$ | Attr$_0^n$ | Attr$_1^n$ |

Geom_slice_header | Geom_slice_data |

```
Tile(0).tile_bounding_box_xyz0;
Tile(0).tile_bounding_box_whd;
          . . .
Tile(n).tile_bounding_box_xyz0;
Tile(n).tile_bounding_box_whd;
```

```
geom_ geom_ parameter_set_id;
geom_tile_id;
geom_slice_id;
geomBoxOrigin;
geom_box_log2_scale;
geom_max_node_size_log2;
geom_num_points;
```

EP 4 787 860 A1

# FIG. 15

| seq_parameter_set_rbsp( ) {                              | Descriptor |
|----------------------------------------------------------|------------|
| profile_idc                                              | u(8)       |
| profile_compatibility_flags                              | uv(24)     |
| ...                                                      |            |
| sps_num_attribute_sets                                   | ue(v)      |
| for( i = 0; i< sps_num_attribute_sets; i++ ) {           |            |
| attribute_dimension[ i ]                                 | ue(v)      |
| attribute_instance_id[ i ]                               | ue(v)      |
| ...                                                      |            |
| }                                                        |            |
| pred_mode_skip_flag                                      | u(1)       |
| pred_mode_split_enable                                   | u(1)       |
|                                                          |            |
| ...                                                      |            |
| byte_alignment( )                                        |            |
| }                                                        |            |

# FIG. 16

| geometry_parameter_set_rbsp( ) { | Descriptor |
|---|---|
| gps_geom_parameter_set_id | ue(v) |
| gps_seq_parameter_set_id | ue(v) |
| geom_tree_type | u(2) |
| ... | |
| if (geom_tree_type==1) { | |
| pred_mode_skip_flag | u(1) |
| pred_mode_split_enable | u(1) |
| } | |
| | |
| ... | |
| byte_alignment( ) | |
| } | |

# FIG. 17

| tile_parameter_set( ) { | Descriptor |
|---|---|
| num_tiles | ue(v) |
| for( i = 0; i < num_tiles; i++ ) { | |
| tile_bounding_box_offset_x[ i ] | se(v) |
| tile_bounding_box_offset_y[ i ] | se(v) |
| ... | |
| if (geom_tree_type==1) { | |
| pred_mode_skip_flag | u(1) |
| pred_mode_split_enable | u(1) |
| } | |
| ... | |
| } | |
| byte_alignment( ) | |
| } | |

# FIG. 18

| geometry_data_unit() { | Descriptor |
|---|---|
|   geometry_data_unit_header() | |
|   if(geom_tree_type == 0) | |
|     occupancy_tree() | |
|   else if(geom_tree_type == 1) | |
|     predictive_tree() | |
|   geometry_data_unit_footer() | |
| } | |

# FIG. 19

| geometry_slice_header( ) { | Descriptor |
|---|---|
|    gsh_geometry_parameter_set_id | ue(v) |
|    gsh_tile_id | ue(v) |
|    gsh_tile_id | ue(v) |
|    ... | |
|    if (geom_tree_type==1) { | |
|      pred_mode_skip_flag | u(1) |
|      pred_mode_split_enable | u(1) |
|    } | |
|    ... | |
|    } | |
|    byte_alignment( ) | |
| } | |

# FIG. 20

| predictive_tree() { | Descriptor |
|---|---|
| *PtnCnt* | |
|   if (pred_mode_split_enable == false) { | |
|     do { | |
|       predictive_tree_node(0, *PtnCnt*) | ae(v) |
|       ptree_end_of_slice | |
|     } while(¬ptree_end_of_slice) | |
|   } else { | |
|     if(pred_mode_skip_flag == false) { | |
|     do { | |
|       predictive_tree_node(0, *PtnCnt*) | |
|     } while(¬ptree_end_of_slice) | |
|     } | |
|     do { | |
|       predictive_tree_node(0, *PtnCnt*) | |
|     } while(¬ptree_end_of_slice) | |
|     ptree_end_of_slice | ae(v) |
|   } | |
| } | |

# FIG. 21

| predictive_tree_node(dpth, nodeIdx) { | Descriptor |
|---|---|
| ... | |
| if(ptn_inter_flag[nodeIdx]) | |
| ptn_inter_pred_mode[nodeIdx] | ae(v) |
| else { | |
| if(pred_mode_skip_flag  == false) { | |
| if(¬ptree_ang_azimuth_scaling_enabled) | |
| ptn_pred_mode[nodeIdx] | ae(v) |
| else | |
| ptn_pred_idx[nodeIdx] | ae(v) |
| } | |
| }  ... | |
| } | |

# FIG. 22

| predictive_tree_mode(dpth, nodeIdx) { | Descriptor |
|---|---|
| ptn_pred_mode_cnt | ae(v) |
| if(ptn_inter_flag[nodeIdx]) | |
| ptn_inter_pred_mode[nodeIdx] | ae(v) |
| else | |
| if(¬ptree_ang_azimuth_scaling_enabled) | |
| ptn_pred_mode[nodeIdx] | ae(v) |
| else | |
| ptn_pred_idx[nodeIdx] | ae(v) |
| for(i=0; i<(ptn_child_cnt_cor1[nodeIdx]^1; i+=ptn_pred_mode_cnt) | |
| predictive_tree_mode(dpth + 1, PtnCnt + Pnt_pred_mode_cnt) | |
| } | |

# FIG. 23

| predictive_tree_residual(dpth, nodeIdx) { | Descriptor |
|---|---|
| *PtnCnt++* | |
| if(geom_scaling_enabled && ¬(nodeIdx % PtnQpInterval)) { | |
| ptn_qp_offset_abs[nodeIdx] | ae(v) |
| if(ptn_qp_offset_abs[nodeIdx]) | |
| ptn_qp_offset_sign[nodeIdx] | ae(v) |
| } | |
| if(geom_dup_point_counts_enabled) | |
| ptn_dup_point_cnt[nodeIdx] | ae(v) |
| ptn_child_cnt_xor1[nodeIdx] | ae(v) |
| if(slice_inter_prediction && dpth) | |
| ptn_inter_flag[nodeIdx] | ae(v) |
| // deleted mode related lines | |
| if(geom_angular_enabled) { | |
| ... | ae(v) |
| } | |
| ... | |
| for(i=0; i<(ptn_child_cnt_cor1[nodeIdx]^1; i++) | |
| } | |

# FIG. 24

```
┌────────────────────────────────┐
│                                │
│     Encode point cloud data    │──── S2400
│                                │
└────────────────────────────────┘
                 │
                 ▼
┌────────────────────────────────┐
│      Transmit bitstream        │
│   including point cloud data   │──── S2410
│                                │
└────────────────────────────────┘
```

# FIG. 25

```
┌────────────────────────────────┐
│   Receive bitstream including  │
│        point cloud data        │──── S2500
│                                │
└────────────────────────────────┘
                 │
                 ▼
┌────────────────────────────────┐
│                                │
│     Decode point cloud data    │──── S2510
│                                │
└────────────────────────────────┘
```

## INTERNATIONAL SEARCH REPORT

| International application No. |
|---|
| **PCT/KR2024/014631** |

| A. | CLASSIFICATION OF SUBJECT MATTER |
|---|---|

**H04N 19/597**(2014.01)i; **H04N 19/96**(2014.01)i; **H04N 19/174**(2014.01)i; **H04N 19/70**(2014.01)i; **H04N 19/157**(2014.01)i; **H04N 19/184**(2014.01)i

According to International Patent Classification (IPC) or to both national classification and IPC

| B. | FIELDS SEARCHED |
|---|---|

Minimum documentation searched (classification system followed by classification symbols)

H04N 19/597(2014.01); G06N 3/08(2006.01); G06T 9/00(2006.01); G06T 9/20(2006.01); G06T 9/40(2006.01); H04N 19/117(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 포인트 클라우드(point cloud), 지오메트리(geometry), 어트리뷰트(attribute), 예측(predict), 비트스트림(bitstream)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022-015006 A1 (LG ELECTRONICS INC.) 20 January 2022 (2022-01-20) See paragraphs [0094], [0098], [0293], [0295], [0319], [0363], [0365] and [0660]; claim 11; and figures 16 and 18. | 1-4,7-10,12-15 |
| Y | | 5-6,11 |
| Y | WO 2022-025552 A1 (LG ELECTRONICS INC.) 03 February 2022 (2022-02-03) See paragraphs [0193], [0273] and [0285]. | 5-6,11 |
| X | KR 10-2023-0131878 A (INTERDIGITAL PATENT HOLDINGS, INC.) 14 September 2023 (2023-09-14) See paragraph [0052]; and figure 13. | 1,7-8,14 |
| X | KR 10-2023-0127219 A (QUALCOMM INCORPORATED) 31 August 2023 (2023-08-31) See paragraphs [0068] and [0196]; claim 20; and figure 15. | 1,7-8,14 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 January 2025** | **06 January 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/014631**

### C.    DOCUMENTS CONSIDERED TO BE RELEVANT

| Category* | Citation of document, with indication, where appropriate, of the relevant passages | Relevant to claim No. |
|---|---|---|
| X | KR 10-2023-0124018 A (GUANGDONG OPPO MOBILE TELECOMMUNICATIONS CORP., LTD.) 24 August 2023 (2023-08-24) See paragraphs [0051] and [0062]; claim 1; and figures 3-4. | 1,7-8,14 |

Form PCT/ISA/210 (second sheet) (July 2022)

**INTERNATIONAL SEARCH REPORT**
Information on patent family members

International application No.

**PCT/KR2024/014631**

| Patent document cited in search report | | | Publication date (day/month/year) | Patent family member(s) | | | Publication date (day/month/year) |
|---|---|---|---|---|---|---|---|
| WO | 2022-015006 | A1 | 20 January 2022 | US | 2023-0260163 | A1 | 17 August 2023 |
| WO | 2022-025552 | A1 | 03 February 2022 | US | 2023-0394712 | A1 | 07 December 2023 |
| KR | 10-2023-0131878 | A | 14 September 2023 | CN | 116803082 | A | 22 September 2023 |
| | | | | EP | 4275354 | A1 | 15 November 2023 |
| | | | | US | 2024-0078715 | A1 | 07 March 2024 |
| | | | | WO | 2022-150680 | A1 | 14 July 2022 |
| KR | 10-2023-0127219 | A | 31 August 2023 | EP | 4272166 | A1 | 08 November 2023 |
| | | | | JP | 2024-501966 | A | 17 January 2024 |
| | | | | WO | 2022-147015 | A1 | 07 July 2022 |
| KR | 10-2023-0124018 | A | 24 August 2023 | CN | 116601947 | A | 15 August 2023 |
| | | | | CN | 117710587 | A | 15 March 2024 |
| | | | | EP | 4270949 | A1 | 01 November 2023 |
| | | | | JP | 2024-505796 | A | 08 February 2024 |
| | | | | US | 2023-0326090 | A1 | 12 October 2023 |
| | | | | WO | 2022-133755 | A1 | 30 June 2022 |

Form PCT/ISA/210 (patent family annex) (July 2022)